(19) **Europäisches Patentamt / European Patent Office / Office européen des brevets**

(11) **EP 2 935 965 B1**

(12) **FASCICULE DE BREVET EUROPEEN**

(45) Date de publication et mention
de la délivrance du brevet:
**23.12.2020 Bulletin 2020/52**

(51) Int Cl.:
**F16L 33/01** *(2006.01)*　　**F16L 33/207** *(2006.01)*
**F16L 33/28** *(2006.01)*　　**F16L 33/34** *(2006.01)*

(21) Numéro de dépôt: **13815758.1**

(22) Date de dépôt: **20.12.2013**

(86) Numéro de dépôt international:
**PCT/EP2013/077857**

(87) Numéro de publication internationale:
**WO 2014/096429 (26.06.2014 Gazette 2014/26)**

(54) **EMBOUT DE CONNEXION D'UNE CONDUITE FLEXIBLE DE TRANSPORT DE FLUIDE ET PROCÉDÉ ASSOCIÉ**

**VERBINDUNGSENDSTÜCK FÜR EINEN SCHLAUCH FÜR DEN TRANSPORT VON FLÜSSIGKEITEN UND ZUGEHÖRIGES VERFAHREN**

**CONNECTION END-PIECE OF A FLEXIBLE PIPE FOR TRANSPORTING FLUID AND ASSOCIATED METHOD**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **21.12.2012 FR 1262692**

(43) Date de publication de la demande:
**28.10.2015 Bulletin 2015/44**

(73) Titulaire: **TECHNIP N-POWER
92400 Courbevoie (FR)**

(72) Inventeurs:
• **ESPINASSE, Philippe, François
F-76420 Bihorel (FR)**
• **MALOBERTI, René, Antoine
F-94500 Champigny sur Marne (FR)**
• **BOURGET, Jean-Christophe
F-76130 Mont Saint Aignan (FR)**
• **CHAUDET, Guillaume
F-76770 Malaunay (FR)**

(74) Mandataire: **Lavoix
2, place d'Estienne d'Orves
75441 Paris Cedex 09 (FR)**

(56) Documents cités:
**EP-A1- 0 241 656　　EP-A1- 1 867 905
EP-A2- 0 264 587　　WO-A1-03/004921
WO-A1-2008/037867　　US-A- 4 634 153
US-A- 4 875 717　　US-A- 4 950 001**

## Description

La présente invention concerne une conduite flexible de transport de fluide selon le préambule de la revendication 1.

WO 03/004921 décrit une conduite flexible du type précité. La conduite est en particulier une conduite flexible de type non liée (« unbonded ») destinée au transport d'hydrocarbures à travers une étendue d'eau, tel qu'un océan, une mer, un lac ou une rivière.

Une telle conduite flexible est par exemple réalisée suivant les documents normatifs API 17J (Spécification for Unbonded Flexible Pipe) et API RP 17B (Recommended Practice for Flexible Pipe) établis par l'American Petroleum Institute.

La conduite est généralement formée d'un ensemble de couches concentriques et superposées. Elle est considérée comme « non liée » au sens de la présente invention dès lors qu'au moins une des couches de la conduite est apte à se déplacer longitudinalement par rapport aux couches adjacentes lors d'une flexion de la conduite. En particulier, une conduite non liée est une conduite dépourvue de matériaux liants raccordant des couches formant la conduite.

La conduite est généralement disposée à travers une étendue d'eau, entre un ensemble de fond, destiné à recueillir le fluide exploité dans le fond de l'étendue d'eau et un ensemble de surface flottant destiné à collecter et à distribuer le fluide. L'ensemble de surface peut être une plateforme semi-submersible, un FPSO ou un autre ensemble flottant.

Dans certains cas, pour l'exploitation de fluides en eaux profondes, la conduite flexible présente une longueur supérieure à 800 m. Les extrémités de la conduite présentent des embouts pour le raccordement à l'ensemble de fond et à l'ensemble de surface.

Ces conduites subissent des efforts très élevés en traction axiale, notamment lorsque l'étendue d'eau dans laquelle est disposée la conduite est très profonde.

Dans ce cas, l'embout supérieur reliant la conduite à l'ensemble de surface doit reprendre une tension axiale très importante, qui peut atteindre plusieurs centaines de tonnes. Ces efforts sont transmis à l'embout par l'intermédiaire des nappes d'armures de traction s'étendant le long de la conduite.

La tension axiale présente non seulement une valeur moyenne élevée, mais aussi des variations permanentes en fonction des mouvements verticaux de l'ensemble de surface et de la conduite, sous l'effet de l'agitation de l'étendue d'eau provoquée par la houle ou par les vagues.

Les variations de tension axiale peuvent atteindre plusieurs dizaines de tonnes et se répéter continuellement durant la durée de service de la conduite. En 20 ans, le nombre de cycles peut ainsi atteindre plus de 20 millions.

Il est donc nécessaire d'assurer une fixation particulièrement robuste entre les nappes d'armures de traction et le corps de l'embout.

WO 2007/144553 décrit un embout du type précité, dans lequel les fils d'armures s'écartent de manière hélicoïdale de l'axe de la conduite, puis se rapprochent de manière hélicoïdale de l'axe de la conduite dans la chambre délimitée par la voûte d'extrémité et par le capot de l'embout. Ceci engendre un effet de type « cabestan », qui verrouille en position les fils d'armure dans l'embout.

Cependant, un tel embout ne donne pas entière satisfaction. Pour assembler l'embout, il est nécessaire d'écarter les fils d'armure de l'axe de la conduite, puis de les rapprocher vers l'axe de la conduite, ce qui produit un écrouissage de chaque fil d'armure au niveau du point d'écartement. Cet écrouissage est susceptible d'engendrer un affaiblissement local de la liaison, qui peut s'avérer préjudiciable au cours du temps, notamment lorsque l'embout subit des variations de tension axiale répétitives.

Pour pallier ce défaut, WO 2007/144553 propose de disposer un collier autour des armures sans le serrer, afin de limiter la déformation radiale de chaque fil d'armure lors de l'assemblage.

Une telle solution n'est cependant pas suffisante dans certains cas, en particulier lorsque la conduite subit de nombreux cycles de variation de tension axiale.

Un but de l'invention est donc d'obtenir un embout qui garantisse une reprise en tension axiale efficace, non seulement pour des tensions axiales moyennes élevées, mais aussi lorsque de nombreux cycles de variation de tension axiale s'appliquent sur la conduite.

A cet effet, l'invention a pour objet une conduite flexible selon la revendication 1.

La conduite selon l'invention peut comprendre l'une ou plusieurs des caractéristiques des revendications 2 à 11.

La description a également pour objet un embout de connexion d'une conduite flexible de transport de fluide, la conduite flexible comprenant au moins une gaine de pression et au moins une couche d'armures de traction disposée extérieurement par rapport à la gaine de pression, l'embout comprenant :

-    une voûte d'extrémité s'étendant suivant un axe central ;
-    un capot extérieur fixé sur la voûte d'extrémité et délimitant avec la voûte d'extrémité, une chambre de réception d'un tronçon d'extrémité des éléments d'armure ;
-    au moins un organe annulaire appliqué extérieurement sur les éléments d'armure d'une couche d'armure, l'organe annulaire étant logé au moins en partie dans la chambre de réception entre les éléments d'armure et le capot extérieur ;

caractérisé en ce que l'organe annulaire applique sur les éléments d'armure une pression radiale de serrage vers l'axe central

et en ce qu'au moins une partie libre d'un tronçon d'extrémité d'un élément d'armure fait saillie axialement vers la voûte d'extrémité au-delà de l'organe annulaire dans la chambre de réception, la partie libre étant noyée dans un matériau de remplissage disposé dans la chambre de réception.

Dans ce cas, l'organe annulaire n'applique pas nécessairement sur les éléments d'armure une pression radiale de serrage vers l'axe central supérieure à 100 bars.

De préférence, l'organe annulaire de cet embout reprend alors partiellement la tension axiale transmise par la ou les couches d'armures. Il reprend par exemple entre 15% et 50% de la tension axiale transmise par la ou les couches d'armures

L'embout selon l'invention peut en outre comprendre l'une ou plusieurs des caractéristiques ci-dessus, prise(s) isolément ou suivant toute combinaison techniquement possible.

L'invention a également pour objet un procédé de montage selon la revendication 12.

Le procédé selon l'invention peut comprendre l'une ou plusieurs des caractéristiques des revendications 13 et 14.

L'invention sera mieux comprise à la lecture de la description qui va suivre, donnée uniquement à titre d'exemple, et faite en se référant aux dessins annexés, sur lesquels :

- la figure 1 est une vue en perspective partiellement écorchée d'un tronçon d'une conduite flexible sur laquelle est monté un embout selon l'invention ;
- la figure 2 est une vue schématique simplifiée, prise en coupe suivant un plan axial médian, des parties pertinentes d'un premier embout d'une conduite flexible selon l'invention ;
- la figure 3 est une vue d'un détail d'une variante de sertissage avant de la gaine de pression du premier embout selon l'invention ;
- la figure 4 est une vue analogue à la figure 2 d'un deuxième embout selon l'invention ;
- la figure 5 est une vue analogue à la figure 2 d'un troisième embout selon l'invention ;
- la figure 6 est une vue analogue à la figure 2 d'un quatrième embout selon l'invention ;
- la figure 7 est une vue analogue à la figure 2 d'un cinquième embout selon l'invention ;
- la figure 8 est une vue analogue à la figure 2 d'un sixième embout selon l'invention ;
- la figure 9 est une vue de face d'un organe annulaire de serrage des fils d'armure dans le sixième embout selon l'invention ;
- la figure 10 est une vue analogue à la figure 2 d'un septième embout selon l'invention ;
- la figure 11 est une vue analogue à la figure 2 d'un huitième embout selon l'invention ;
- la figure 12 est une vue de côté d'un exemple d'organe annulaire de serrage pour un embout selon l'invention ;
- la figure 13 est une vue d'un détail de la figure 12 ;
- la figure 14 est une vue analogue à la figure 13 d'un autre exemple d'organe annulaire de serrage ;
- la figure 15 est une vue d'un détail d'une variante d'élément d'armure pour un embout selon l'invention ;
- la figure 16 est une vue analogue à la figure 10 d'une autre variante d'élément d'armure pour un embout selon l'invention.

Dans tout ce qui suit, les termes « extérieur » et « intérieur » s'entendent généralement de manière radiale par rapport à un axe A-A' de la conduite, le terme « extérieur » s'entendant comme relativement plus éloigné radialement de l'axe A-A' et le terme « intérieur » s'étendant comme relativement plus proche radialement de l'axe A-A' de la conduite.

Les termes « avant » et « arrière » s'entendent de manière axiale par rapport à un axe A-A' de la conduite, le terme « avant » s'entendant comme relativement plus éloigné du milieu de la conduite et plus proche d'une de ses extrémités, le terme « arrière » s'entendant comme relativement plus proche du milieu de la conduite et plus éloigné d'une de ses extrémités. Le milieu de la conduite est le point de la conduite situé à égale distance des deux extrémités de cette dernière.

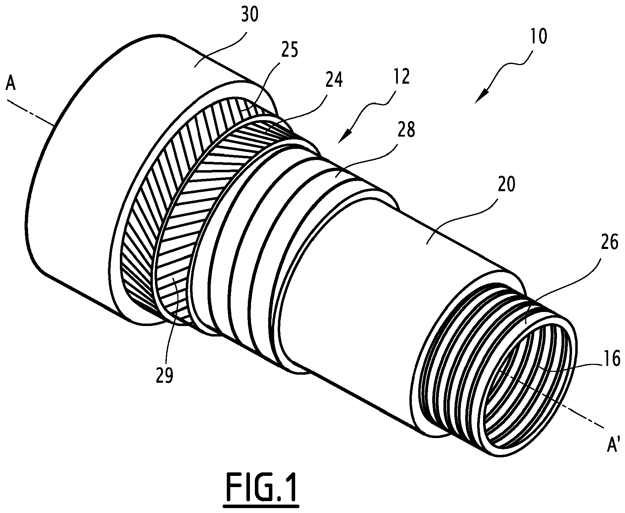

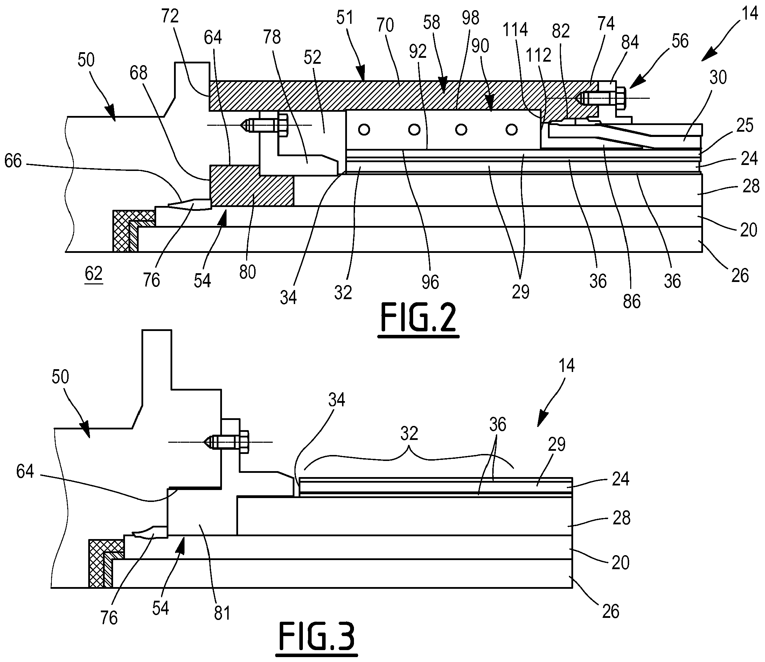

Une première conduite flexible 10 selon l'invention est illustrée partiellement par la figure 1 et par la figure 2.

La conduite flexible 10 comporte un tronçon central 12 illustré en partie sur la figure 1. Elle comporte, à chacune des extrémités axiales du tronçon central 12, un embout d'extrémité 14 (non visible sur la Figure 1) dont les parties pertinentes sont représentées sur la figure 2.

En référence à la figure 1, la conduite 10 délimite un passage central 16 de circulation d'un fluide, avantageusement d'un fluide pétrolier. Le passage central 16 s'étend suivant un axe A-A', entre l'extrémité amont et l'extrémité aval de la conduite 10. Il débouche à travers les embouts 14.

La conduite flexible 10 est destinée à être disposée à travers une étendue d'eau (non représentée) dans une installation d'exploitation de fluide, notamment d'hydrocarbures.

L'étendue d'eau est par exemple, une mer, un lac ou un océan. La profondeur de l'étendue d'eau au droit de l'installation d'exploitation de fluide est par exemple comprise entre 500 m et 3000 m.

L'installation d'exploitation de fluide comporte un ensemble de surface notamment flottant et un ensemble de fond (non représentés) qui sont généralement raccordés entre eux par la conduite flexible 10.

La conduite flexible 10 est de préférence une conduite « non liée » (désignée par le terme anglais « unbonded »).

Au moins deux couches adjacentes de la conduite flexible 10 sont libres de se déplacer longitudinalement l'une par rapport à l'autre lors d'une flexion de la conduite. Avantageusement, toutes les couches de la conduite flexible sont libres de se déplacer l'une par rapport à l'autre. Une telle conduite est par exemple décrite dans les documents normatifs publiés par l'American Petroleum Institute (API), API 17J, et API RP17B.

Comme illustré par la figure 1, la conduite 10 délimite une pluralité de couches concentriques autour de l'axe A-A', qui s'étendent continûment le long du tronçon central 12 jusqu'aux embouts 14 situés aux extrémités de la conduite.

Selon l'invention, la conduite 10 comporte au moins une première gaine 20 à base de matériau polymère constituant avantageusement une gaine de pression.

La conduite 10 comporte en outre au moins une couche d'armures de traction 24, 25 disposée extérieurement par rapport à la première gaine 20.

Avantageusement, et selon l'utilisation souhaitée, la conduite 10 comporte en outre une carcasse interne 26 disposée à l'intérieur de la gaine de pression 20, une voûte de pression 28 intercalée entre la gaine de pression 20 et la ou les couches d'armures de traction 24, 25 et une gaine externe 30, destinée à la protection de la conduite 10.

De manière connue, la gaine de pression 20 est destinée à confiner de manière étanche le fluide transporté dans le passage 16. Elle est formée en matériau polymère, par exemple à base d'un polyoléfine tel que du polyéthylène, à base d'un polyamide tel que du PA11 ou du PA12, ou à base d'un polymère fluoré tel que du polyfluorure de vinylidène (PVDF).

L'épaisseur de la gaine de pression 20 est par exemple comprise entre 5 mm et 20 mm.

La carcasse 26, lorsqu'elle est présente, est formée par exemple d'un feuillard métallique profilé, enroulé en spirale. Les spires du feuillard sont avantageusement agrafées les unes aux autres, ce qui permet de reprendre les efforts radiaux d'écrasement.

Dans cet exemple, la carcasse 26 est disposée à l'intérieur de la gaine de pression 20. La conduite est alors désignée par le terme anglais « rough bore » en raison de la géométrie de la carcasse 26

En variante (non représentée), la conduite flexible 10 est dépourvue de carcasse interne 26, elle est alors désignée par le terme anglais « smooth bore ».

L'enroulement hélicoïdal du feuillard métallique profilé formant la carcasse 26 est à pas court, c'est-à-dire qu'il présente un angle d'hélice de valeur absolue proche de 90°, typiquement compris entre 75° et 90°.

Dans cet exemple, la voûte de pression 28 est destinée à reprendre les efforts liés à la pression régnant à l'intérieur de la gaine de pression 20. Elle est par exemple formée d'un fil profilé métallique entouré en hélice autour de la gaine 20. Le fil profilé présente généralement une géométrie complexe, notamment en forme de Z, de T, de U, de K, de X ou de I.

La voûte de pression 28 est enroulée en hélice à pas court autour de la gaine de pression 20, c'est-à-dire avec un angle d'hélice de valeur absolue proche de 90°, typiquement compris entre 75° et 90°.

La conduite flexible 10 selon l'invention comprend au moins une couche d'armures 24, 25 formée d'un enroulement hélicoïdal d'au moins un élément d'armure 29 allongé.

Dans l'exemple représenté sur la figure 1, la conduite flexible 10 comporte une pluralité de couches d'armures 24, 25, notamment une couche d'armures intérieure 24, appliquée sur la voûte de pression 28 (ou sur la gaine 20 lorsque la voute 28 est absente) et une couche d'armures extérieure 25 autour de laquelle est disposée la gaine extérieure 30.

Chaque couche d'armures 24, 25 comporte des éléments d'armure 29 longitudinaux enroulés à pas long autour de l'axe A-A' de la conduite.

Par « enroulé à pas long », on entend que la valeur absolue de l'angle d'hélice est inférieure à 60°, et est typiquement comprise entre 25° et 55°.

Les éléments d'armure 29 d'une première couche 24 sont enroulés généralement suivant un angle opposé par rapport aux éléments d'armure 29 d'une deuxième couche 25. Ainsi, si l'angle d'enroulement des éléments d'armure 29 de la première couche 24 est égal à + $\alpha$, $\alpha$ étant compris entre 25° et 55°, l'angle d'enroulement des éléments d'armure 29 de la deuxième couche d'armure 25 disposée au contact de la première couche d'armures 24 est par exemple de - a, avec $\alpha$ compris entre 25° et 55°.

Les éléments d'armure 29 sont par exemple formés par des fils métalliques, ou par des rubans.

Comme on le verra plus bas, les éléments d'armure 29 présentent chacun un tronçon d'extrémité 32 introduit dans l'embout 14. Le tronçon d'extrémité 32 s'étend jusqu'à une extrémité libre 34 disposée dans l'embout 14. Il présente avantageusement une trajectoire hélicoïdale ou pseudo-hélicoïdale d'axe A-A' dans l'embout 14.

Dans cet exemple, chaque couche d'armures 25, 26 est munie d'au moins une bande anti-usure 36 sur laquelle la couche 25, 26 s'appuie. La bande anti-usure 36 est par exemple réalisée en plastique.

Dans l'exemple représenté sur la figure 2, la bande anti-usure 36 s'étend jusqu'à l'extrémité libre 34 de chaque élément d'armure 29. En variante, comme on le verra plus bas, le tronçon d'extrémité 32 de chaque élément d'armure 29 est dénudé pour être dépourvu de bande anti-usure.

La gaine externe 30 est destinée à empêcher la perméation de fluide depuis l'extérieur de la conduite flexible vers l'intérieur. Elle est avantageusement réalisée en matériau polymère, notamment à base d'un polyoléfine, tel que du polyéthylène, à base d'un polyamide, tel que du PA11 ou du PA12, ou à base d'un polymère fluoré tel que du polyfluorure de vinylidène (PVDF).

L'épaisseur de la gaine externe 30 est par exemple comprise entre 5 mm et 15 mm.

Comme illustré par la figure 2, chaque embout 14 comporte une voûte d'extrémité 50 et un capot extérieur de liaison 51 faisant saillie axialement vers l'arrière à partir de la voûte 50. Le capot 51 délimite, avec la voûte d'extrémité 50, une chambre 52 de réception des extrémités libres 34 des éléments d'armure 29.

L'embout 14 comporte en outre un ensemble avant 54 d'étanchéité autour de la gaine de pression 20, et un ensemble arrière 56 d'étanchéité autour de la gaine extérieure 30.

L'embout 14 comprend de plus un ensemble 58 de fixation des couches d'armures 24, 25 dans la chambre 52.

Dans cet exemple, la voûte d'extrémité 50 est destinée à raccorder la conduite 10 à un autre embout de connexion 14 ou à des équipements terminaux, avantageusement par l'intermédiaire d'une bride d'extrémité (non représentée).

La voûte 50 présente un alésage central 62 destiné à recevoir l'extrémité de la première gaine 20 et à permettre l'écoulement du fluide circulant à travers le passage central 16 vers l'extérieur de la conduite 10.

Dans l'exemple de la figure 2, la voûte d'extrémité 50 définit intérieurement une face arrière 64 délimitant une surface convergente 66 d'appui pour une bague de sertissage et un logement 68 d'introduction d'une bague arrière d'arrêt.

Le capot 51 comporte une paroi périphérique 70 tubulaire s'étendant autour de l'axe A-A'. La paroi périphérique 70 présente un bord avant 72 fixé sur la voûte d'extrémité 50, à l'écart radialement des couches d'armures 24, 25 et un bord arrière 74 s'étendant axialement vers l'arrière au-delà de la voûte d'extrémité 50.

Le capot 51 délimite la chambre 52 radialement vers l'extérieur. La face arrière 64 de la voûte d'extrémité 50 délimite axialement la chambre 52 vers l'avant.

L'ensemble avant d'étanchéité 54 est avantageusement situé à l'avant de l'embout 14, en contact avec la voûte 50, en étant décalé axialement vers l'avant par rapport à l'ensemble de fixation 58, et par rapport à l'ensemble aval d'étanchéité 56.

Il comporte une bague avant de sertissage 76, destinée à venir en prise sur la gaine de pression 20, et une bride avant de serrage 78 de la bague avant de sertissage 76.

Dans l'exemple représenté sur la figure 2, dans lequel la conduite 10 comporte une voûte de pression 28, l'ensemble avant 54 comporte en outre une bague intermédiaire 80 d'arrêt de la voûte de pression 28, intercalée entre la bague de sertissage 76 et la bride de serrage 80.

La bague de sertissage 76 est ainsi calée sur la surface convergente 66 et est comprimée par la bride de serrage 78 pour sertir la gaine 20.

Dans la variante représentée sur la figure 3, la bague avant de sertissage 76 est disposée en appui direct sur la bride avant de serrage 81 sans pièce intermédiaire entre les deux.

L'ensemble arrière d'étanchéité 56 est disposé à l'arrière de l'ensemble de fixation 58. Il comporte une bague arrière de sertissage 82, une bride arrière 84 de serrage, et avantageusement, une canule intermédiaire d'appui 86 interposée entre la gaine externe 30 et les couches d'armures 24, 25.

La bague arrière de sertissage 82 est interposée entre une surface arrière du capot 51 et la gaine externe 30.

La bride arrière de serrage 84 est fixée sur le bord arrière 74 du capot 51. Elle pousse vers l'avant la bague arrière de sertissage 82 pour la comprimer et sertir la gaine externe 30.

La gaine externe 30 s'appuie sur la canule intermédiaire 86. Elle est calée axialement à l'arrière de l'ensemble de fixation 58.

Selon l'invention, l'ensemble de fixation 58 comporte au moins un organe annulaire 90 de serrage des couches d'armures 24, 25 appliquant une pression radiale P supérieure à 100 bars sur les couches d'armures 24, 25. Il comporte de préférence au moins une couche intermédiaire 92 de frottement disposée entre l'organe annulaire 90 et la couche d'armures extérieure 25, et/ou entre l'organe annulaire 90 et le capot 51 et/ou entre les couches d'armures 24, 25.

Selon l'invention, l'organe annulaire de serrage 90 applique sur les couches d'armures 24, 25, une pression radiale P dirigée vers l'axe A-A' supérieure à 100 bars, notamment supérieure à 150 bars, et par exemple comprise entre 180 bars et 250 bars.

Cette pression radiale est appliquée sur une longueur active L qui, dans cet exemple correspond à la longueur de l'organe annulaire 90, prise le long de l'axe A-A'.

En référence aux figures 2 et 12 à 14, l'organe annulaire de serrage 90 comporte un corps tubulaire 94 d'axe A-A' présentant une surface périphérique intérieure 96 d'appui sur les tronçons d'extrémité 32 des éléments d'armure 29 de la couche d'armures 25, et une surface périphérique extérieure 98, destinée à la liaison axiale avec le capot 51.

Dans l'exemple représenté sur la figure 2, la surface périphérique intérieure 96 est cylindrique d'axe A-A'. Elle maintient les tronçons d'extrémité 32 des éléments d'armure 29 dans une enveloppe cylindrique, de sorte que ces tronçons d'extrémité 32 ne s'écartent pas ou ne se rapprochent pas de l'axe A-A'.

Les tronçons d'extrémité 32 peuvent ainsi adopter une configuration hélicoïdale qui n'implique pas de décollement des éléments d'armure 29 à l'écart de l'axe A-A'.

Dans cet exemple, l'organe annulaire de serrage 90 couvre sensiblement la totalité du tronçon d'extrémité 32 de chaque élément d'armure 29 jusqu'à son extrémité libre 34. Chaque tronçon d'extrémité 32 est ainsi placé en prise avec l'organe annulaire 90 sur sensiblement toute la longueur L de l'organe annulaire 90.

La force FR de retenue de l'organe annulaire 90 est proportionnelle à la pression de serrage P, prise au niveau de la surface intérieure 96, à la surface de serrage S et au coefficient de frottement fr entre l'organe annulaire 90 et les éléments d'armure 29 suivant l'équation :

$$FR = P . S . fr$$

Dans le cas d'une surface intérieure 96 cylindrique :
S = L . $\pi$ .D , L et D étant respectivement la longueur et le diamètre interne de l'organe annulaire 90.

Par suite : FR = P . L . $\pi$ . D . fr.

Avantageusement, pour assurer une force de retenue adéquate, la longueur L de l'organe annulaire 90 est supérieure à 200 mm.

L'organe annulaire de serrage 90 est distinct et est décalé axialement par rapport à l'ensemble avant d'étanchéité 54.

Ceci évite de devoir décoller les éléments d'armure 29 radialement à l'écart de l'axe A-A'. Un encombrement radial minimal est ainsi obtenu.

L'organe annulaire de serrage 90 comporte un collier 100 de serrage, appliqué autour de la couche d'armures 25, le collier 100 étant propre à passer d'une configuration radialement expansée de mise en place à une configuration contractée d'application d'une pression radiale supérieure à 100 bars sur les tronçons d'extrémité 32 des éléments d'armure 29.

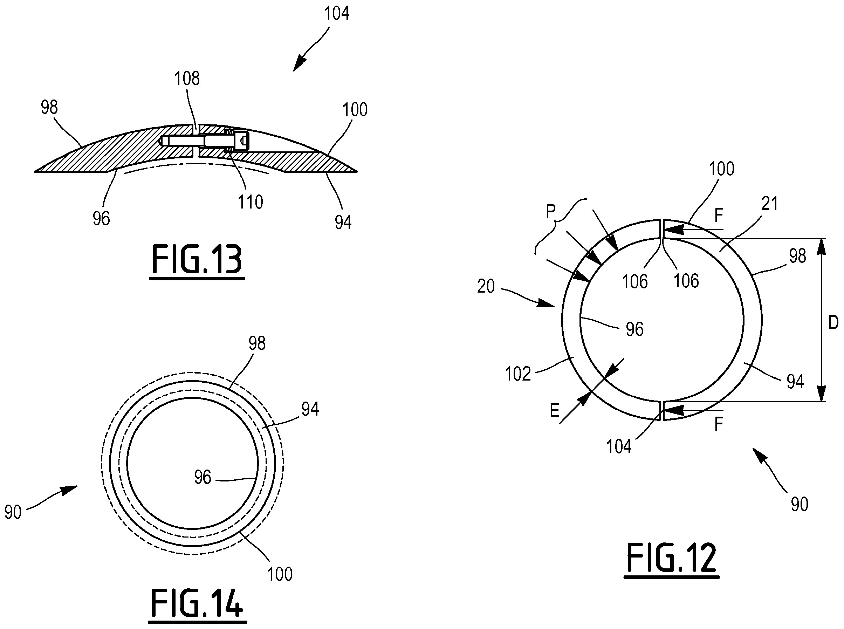

Dans l'exemple illustré par les figures 12 et 13, le collier de serrage 100 comporte une pluralité de segments d'appui 102 assemblés entre eux par des éléments d'assemblage 104.

Chaque segment 102 présente une forme de tronçon longitudinal de cylindre d'axe A-A' présentant une étendue angulaire inférieure à 360°, la somme des étendues angulaires des segments 102 étant sensiblement égale à 360°.

Dans l'exemple représenté sur la figure 12, le nombre de segments 102 est égal à 2, chaque segment 102 s'étendant sur 180°.

En variante, le nombre de segments 102 est supérieur à 2, par exemple égal à N, chaque segment 102 s'étendant sur une étendue angulaire égale à 360°/N.

Les bords latéraux 106 de chaque segment 102 s'étendent le long d'une génératrice du cylindre formé par l'organe annulaire de serrage 90.

Les segments 102 sont assemblés tangentiellement les uns sur les autres par leurs bords latéraux 106 par l'application d'une force tangentielle F engendrée par les éléments d'assemblage 104.

Comme illustré par la figure 13, les éléments d'assemblage 104 comprennent une pluralité de systèmes vis/écrou 108 parallèles, montés tangentiellement à travers les bords latéraux 106 de deux segments 102 adjacents en étant répartis suivant la longueur de chaque bord latéral 106.

Pour appliquer une pression radiale P donnée au niveau de la surface intérieure 96, dans le cas où l'épaisseur E du collier 20 est très inférieure à son diamètre intérieur D, la pression P suit la loi suivante :

$$P = \frac{2F}{DL},$$

où L est la longueur du collier et F est la force de serrage tangentielle des éléments d'assemblage 104.

Avantageusement, pour permettre une respiration des éléments d'assemblage 104, et pour compenser le risque de desserrage du collier 100, qui pourrait être lié au fluage éventuel des bandes anti-usure 36, des rondelles élastiques 110 à grande course, par exemple de type Belleville, sont interposées entre les têtes de vis et les écrous, comme visible sur la figure 13.

Dans une variante illustrée par la figure 14, le collier 100 est formé d'un seul tenant sur toute sa périphérie autour de l'axe A-A', à partir d'un matériau à mémoire de forme.

Le matériau à mémoire de forme présente avantageusement une température de transition inférieure à 0 °C. A température ambiante, le collier 100 présente un diamètre intérieur inférieur au diamètre extérieur de la couche externe d'armures 25. Lors du montage de l'embout, le collier 100 est refroidi en dessous de la température de transition, ce qui permet alors d'augmenter fortement son diamètre interne sans risquer d'endommager le matériau. Cette augmentation de diamètre peut par exemple être effectuée à l'aide d'un mandrin expansible.

Le collier 100 présente alors un diamètre interne sensiblement supérieur à celui de la couche externe d'armures 25, et se trouve dans la configuration expansée de mise en place représentée en pointillés sur la figure 14. Ensuite, le collier 100 est enfilé en configuration expansée autour de la couche externe d'armure 25, la température du collier 100 devant alors être maintenue en dessous de la température de transition.

Enfin, la température du collier 100 est augmentée jusqu'à une valeur supérieure à la température de transition, en pratique jusqu'à la température ambiante, ce qui conduit le matériau à mémoire de forme à reprendre sa géométrie initiale, si bien que le collier 100 reprend alors la configuration rétractée de serrage, illustrée en traits pleins sur la figure 14.

Dans l'exemple illustré par la figure 2, un bord arrière 112 de l'organe annulaire 90 est calé axialement contre un épaulement 114 défini par le capot 51, pour retransmettre au capot 51 et à la voûte 50 les efforts de tension axiale reçus par l'organe annulaire 90. En outre, l'organe annulaire 90 peut être fixé au capot 51 par d'autres moyens, par exemple par l'intermédiaire de vis.

Dans cet exemple, la cavité 52 est dépourvue de matériau de remplissage, la reprise des efforts axiaux provenant des couches d'armures 24, 25 s'effectuant exclusivement par l'intermédiaire de l'organe annulaire 90.

En variante (non représentée), un matériau de remplissage solide, tel qu'une résine polymérique thermodurcissable de type epoxy ou aradilte est disposé dans la chambre 52 autour de l'organe annulaire 90.

De préférence, pour améliorer la reprise des efforts, le coefficient de frottement fr entre la couche d'armures 25 et l'organe annulaire 90 est supérieur à 0,1, avantageusement supérieur à 0,3 et préférentiellement supérieur à 0,4.

Pour ce faire, les tronçons d'extrémité 32 des éléments d'armure 29 sont avantageusement dénudés pour supprimer les bandes anti-usure 36.

Cette opération est par exemple réalisée avant la mise en place de l'organe annulaire 90, en plaçant un collier chauffant ou inductif au droit de la canule arrière 86 sur la couche d'armures 25.

Ceci étant fait, les éléments d'armure 29 sont relâchés pour laisser la couche d'armures 25 externe s'épanouir. Les extrémités des deux bandes anti-usure 36 de cette couche 29 sont ainsi accessibles.

Le collier chauffant est ensuite activé pour atteindre une température d'environ 100°C à 150 °C de manière rapide, afin de limiter la diffusion.

Les parties d'extrémité des bandes anti-usure 36 sont alors arrachées en profitant de la résistance mécanique réduite localement.

Cette opération est en outre répétée pour la couche d'armures interne 24, soit avec le collier chauffant à la même place, soit en le déplaçant vers l'avant de manière incrémentale pour limiter les résistances thermiques et donc le temps de chauffage.

La déchirure obtenue est localisée avantageusement à l'arrière de l'organe annulaire 109. Cette méthode évite toute intrusion mécanique susceptible de créer des défauts locaux sur les éléments d'armure 29.

Avantageusement, les éléments d'armure 29 sont dégraissés, afin d'augmenter le coefficient de frottement de leur surface au niveau du tronçon d'extrémité 32.

De préférence, au moins une couche intermédiaire 92 de frottement est disposée entre l'organe annulaire 90 et la couche d'armures 25, et/ou entre l'organe annulaire 90 et le capot 51 et/ou entre les couches d'armures 24, 25.

Dans certains cas, la couche intermédiaire de frottement 92 augmente le coefficient de frottement jusqu'à au moins 0,35.

La couche intermédiaire 92 peut être réalisée en matériau composite, polymérique ou métallique.

Elle est par exemple formée d'une bande d'un matériau utilisé pour réaliser des garnitures de friction dans les systèmes de freinage. Un tel matériau est par exemple commercialisé par la société Bremskerl sous forme d'une garniture sans amiante présentant un coefficient de frottement avec l'acier de l'ordre de 0,35.

La présence d'au moins une couche intermédiaire de frottement 92 augmente nettement la force de retenue fournie par l'ensemble de fixation 58 en limitant sa longueur.

À titre d'exemple, un organe annulaire 90 de longueur égale à 0,3 m serrant à 200 bars des éléments d'armure 29 de diamètre 0,3 m avec un coefficient de frottement de 0,35 est apte à reprendre une tension de l'ordre de 200 t.

L'assemblage de l'embout 14 selon l'invention est réalisé comme suit.

Initialement, les différentes couches de la conduite 10 sont coupées à la bonne longueur pour faire apparaître, sur la voûte 28, un tronçon d'extrémité libre 32 des couches d'armures 24, 25.

Dans l'exemple de la figure 2, les tronçons d'extrémité libre 32 sont reçus dans une enveloppe cylindrique, et ne subissent donc par de torsion lors de leur mise en place.

L'ensemble aval d'étanchéité 56 est alors mis en place en disposant la canule 86 entre la gaine externe 30 et la couche d'armure externe 25.

De préférence, une couche de frottement 92 est disposée autour des tronçons d'extrémité 32.

Puis, l'organe annulaire 90 dans sa configuration expansée est introduit autour de la couche d'armures 25, avec interposition de la couche de frottement 92.

La voûte 50 et l'ensemble avant d'étanchéité 54 sont ensuite mis en place.

L'organe annulaire 90 est alors passé dans sa configuration rétractée pour appliquer une pression radiale supérieure à 100 bars sur les tronçons d'extrémité 32 des éléments d'armure 29.

Les couches d'armures 24, 25 sont alors fixées sur l'organe annulaire 90 par serrage.

Puis, l'ensemble avant d'étanchéité 54 est activé par serrage. Le capot 51 est ensuite disposé et est mis en prise autour de l'organe annulaire 90, avant d'être fixé sur la voûte 50.

L'ensemble aval d'étanchéité 56 est ensuite activé par serrage sur le capot 51.

En fonctionnement, lorsque l'embout 14 est monté sur un autre embout, ou sur un ensemble de surface, la tension axiale transmise par les couches d'armures 24, 25 résultant du poids de la conduite 10 est reprise radialement par l'organe annulaire 90, de préférence par l'intermédiaire de la couche de frottement 92.

Du fait de la pression élevée de serrage radial, les efforts repris sont significatifs et peuvent être transmis au capot 51 et/ou à la voûte 50 pour assurer une robustesse de l'embout 14.

Les éléments d'armure 29 ont alors des tronçons d'extrémité 32 qui sont maintenus par l'organe annulaire 90 dans une enveloppe cylindrique, sans épanouissement radial. Le risque d'endommagement initial de chaque élément d'armure 29 est donc très limité, ce qui augmente la résistance de l'embout 14 à une tension axiale moyenne très élevée, mais aussi à des variations de tension axiale oscillant autour de la tension moyenne dans un grand nombre de cycles de variation de tension.

La fixation robuste des tronçons d'extrémité 32 des éléments d'armure 29 peut même être obtenue dans ce cas sans injection de matériau de remplissage dans la chambre 52.

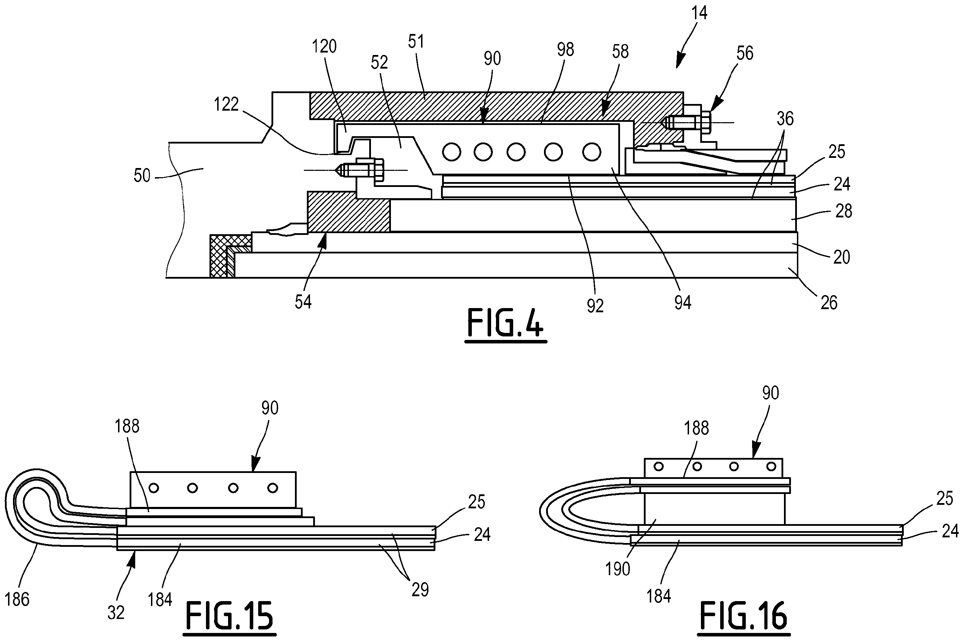

Un deuxième embout 14 selon l'invention est illustré par la figure 4.

À la différence du premier embout 14 représenté sur la figure 2, l'organe annulaire 90 de cet embout 14 comporte au moins un organe 120 d'accrochage axial sur la voûte 50. Cet organe d'accrochage 120 est par exemple formé par un crochet reçu dans une gorge radiale correspondante 122 ménagée dans la voûte.

Dans ce cas, le contact axial entre un bord arrière de l'organe annulaire 90 et le capot 51 n'est plus nécessaire. Les efforts axiaux transmis par les couches d'armures 24, 25 à l'organe annulaire 90 sont repris directement par la coopération entre l'organe d'accrochage 120 et la gorge correspondante 122 sur la voûte 50.

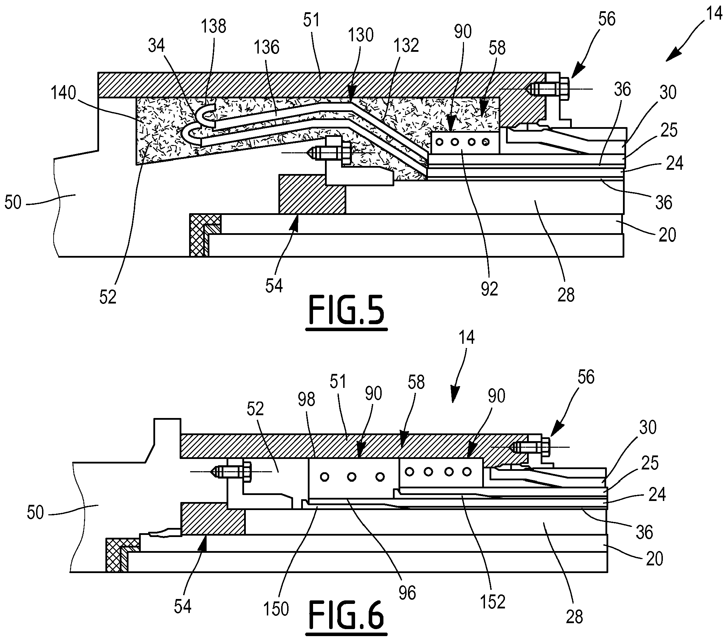

Un troisième embout 14 selon l'invention est illustré par la figure 5.

À la différence du premier embout 14 illustré par la figure 2, l'organe annulaire 90 recouvre partiellement le tronçon d'extrémité 32 de chaque élément d'armure 29, au voisinage du bord arrière 74 du capot 51.

Au moins une partie 130 d'extrémité libre de chaque élément d'armure 29 fait saillie vers l'avant au-delà de l'organe annulaire 90.

Chaque partie d'extrémité libre 130 comporte une région arrière 132 s'écartant radialement de l'axe A-A' en se déplaçant vers l'avant, une région avant 134 se rapprochant radialement de l'axe A-A' en se déplaçant vers l'avant et un organe d'accrochage 138 situé à l'extrémité libre 34 de l'élément d'armure 29.

L'ensemble de fixation 58 comporte alors un matériau de remplissage 140 tel que défini plus haut, le matériau 140 remplissant la chambre 52 pour noyer la partie 130 de chaque élément d'armure 29 et la fixer axialement par rapport à la voûte 50 et au capot 51.

Dans cet exemple, la surface extérieure 98 de l'organe annulaire 90 est située radialement à l'écart du capot 51. Du matériau de remplissage 140 est disposé dans l'espace annulaire défini entre la surface extérieure 98 et le capot 51.

Dans cet embout 14, l'organe annulaire 90 reprend partiellement la tension axiale transmise par les couches d'armures 24, 25. Il reprend par exemple entre 5 % et 50 % de la tension axiale transmise par les couches d'armures 24, 25. Avantageusement, l'organe annulaire 90 reprend entre 15% et 50% de la tension axiale transmise par les couches d'armures 24, 25 .

Dans le cas où l'organe annulaire 90 ne reprend que partiellement la tension axiale transmise par les couches d'armures 24, 25, l'invention pourrait aussi fonctionner lorsque la pression radiale de serrage vers l'axe central A-A' appliquée par l'organe annulaire 90 sur les éléments d'armure 29 est inférieure à 100 bars, par exemple comprise entre 50 bars et 100 bars.

Lorsque l'organe annulaire 90 ne reprend qu'une faible partie de la tension axiale, par exemple moins de 30% de la tension axiale, il est en effet possible de compenser une réduction de la pression de serrage par une augmentation de la longueur de la longueur de l'organe annulaire 90 tout en conservant un encombrement global acceptable.

L'organe annulaire 90 étant situé à l'arrière de la partie d'extrémité libre 130, la contrainte dans les éléments d'armure 29 et les déplacements axiaux de ces derniers sont significativement réduits au niveau de la zone de décollement au début de la région arrière 132.

Ceci réduit grandement le phénomène de fatigue qui peut être observé au niveau de la zone de décollement des éléments d'armures 29, puisque les contraintes sont plus faibles, et les déplacements sont réduits.

Ainsi, en plaçant la zone de décollement des éléments d'armure 29 à l'avant de l'organe annulaire 90, le problème de fatigue des éléments d'armure est résolu, sans avoir besoin pour autant de reprendre la totalité de la charge à l'aide de l'organe annulaire 90.

La longueur de l'organe annulaire 90 peut alors être réduite, notamment lorsque les tensions présentes sur l'embout 14 atteignent plusieurs centaines de tonnes, parfois plus de 1000 t.

Ceci permet de maintenir relativement réduite la longueur L de l'embout 14, tout en reprenant efficacement la charge.

Un quatrième embout 14 selon l'invention est illustré par la figure 6. À la différence du premier embout 14 illustré sur la figure 2, cet embout 14 comporte un organe annulaire 90 individuel associé à chaque couche d'armures 24, 25.

Ainsi, les éléments d'armure 29 de la couche d'armures intérieure 24 se prolongent vers l'avant au-delà des éléments d'armure 29 de la couche d'armures extérieure 25.

Un premier organe annulaire 90 de serrage est appliqué sur la couche d'armures intérieure 24. Un deuxième organe annulaire 90 de serrage est appliqué de manière adjacente au premier organe annulaire de serrage 90 sur la couche d'armures extérieure 25.

Les organes annulaires de serrage 90 sont placés axialement au contact l'un avec l'autre.

De préférence, une couche de frottement 92 est disposée entre chaque couche d'armures 24, 25 et l'organe annulaire 90 disposé sur la couche d'armures respective 24, 25.

Avantageusement, une première canule support 150 de serrage est interposée entre les tronçons d'extrémité 32 des éléments d'armure 29 de la première couche d'armures 24 en regard du premier organe annulaire 90. Une deuxième canule support 152 de serrage est interposée entre la première couche d'armures 24 et les tronçons d'extrémité 32 des éléments d'armure 29 de la deuxième couche d'armures 25, en regard du deuxième organe annulaire 90.

Les canules 150, 152 sont avantageusement cylindriques ou coniques pour respecter l'angle d'épanouissement naturel lié au retour élastique après que les rubans de maintien des éléments d'armure 29 aient été libérés lors du montage de l'embout 14.

Les canules 150, 152 permettent d'obtenir un meilleur support de serrage et évitent d'endommager la voûte de pression 28 lors du serrage.

Une telle disposition diminue la longueur d'ancrage ou augmente la tension reprise, puisque chaque couche d'armures 24, 25 est serrée de façon indépendante.

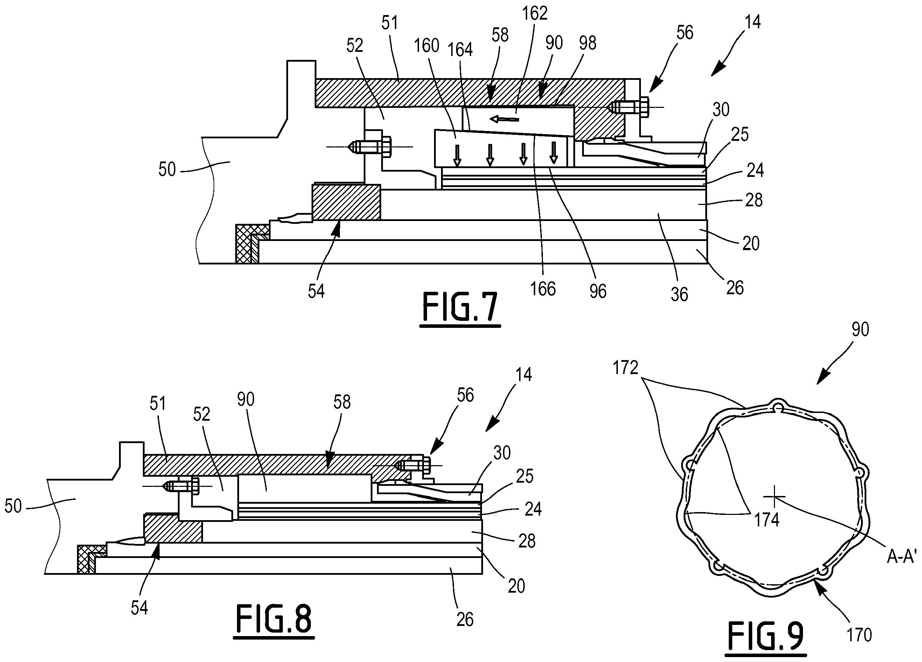

Un cinquième embout 14 selon l'invention est illustré par la figure 7.

À la différence du premier embout 14 illustré sur la figure 2, l'organe annulaire 90 comporte une bague intérieure conique 160 délimitant la surface intérieure 96 disposée au contact du tronçon d'extrémité 32 de la couche d'armures 25.

L'organe annulaire 90 comprend en outre une bague extérieure de serrage 162 propre à serrer la bague intérieure 160 radialement vers l'axe A-A' par effet de coin.

Ainsi, la bague intérieure 160 présente une portée extérieure conique 164 disposée en regard d'une portée intérieure conique 166 de la bague extérieure 162.

La bague extérieure 162 délimite une surface extérieure 98 de contact avec le capot 51.

Le déplacement relatif de la bague extérieure 162 parallèlement à l'axe A-A' le long de la bague intérieure 160 provoque un déplacement radial de la bague intérieure 160 qui engendre une pression radiale de serrage sur les couches d'armures 24, 25. Selon l'invention, cette pression radiale est supérieure à 100 bars.

Un tel organe annulaire 90 présente l'avantage de créer une pression radiale importante.

Dans l'exemple représenté sur la figure 7, la portée extérieure 164 de la bague intérieure 160 et la portée intérieure 166 de la bague extérieure 162 convergent vers l'axe A-A' en se déplaçant vers l'arrière.

Ce système est donc auto-serrant, sans limitation des efforts de serrage sur les couches d'armures 24, 25, et sur la voûte de pression 28.

En variante (non représentée), pour contrôler le serrage, la portée extérieure 164 de la bague intérieure 160 et la portée intérieure 166 de la bague extérieure 162 convergent vers l'axe A-A' en se déplaçant vers l'avant. Dans ce cas, la bague extérieure 162 est bloquée en translation par exemple par une goupille, pour maintenir le serrage.

Un sixième embout 14 selon l'invention est représenté sur les figures 8 et 9.

À la différence du premier embout 14 représenté sur la figure 2, l'organe annulaire 90 de serrage du sixième embout 14 comporte une bague 170 déformée localement sur des secteurs angulaires choisis autour de l'axe A-A'.

Ainsi, lorsqu'elle est disposée de manière active au contact des couches d'armures 24, 25, la bague déformée 170 comporte une pluralité de premières régions angulaires 172 appliquées et serrées sur les tronçons d'extrémité 32 de la couche d'armures 25.

La bague déformée 170 comporte en outre une pluralité de deuxièmes régions angulaires 174 disposées entre les premières régions angulaires 172, les deuxièmes régions angulaires 174 n'étant pas appliquées et serrées sur les tronçons d'extrémité 32 de la couche d'armures 25.

Pour déformer la bague 170, et créer les premières régions angulaires 172 appliquées et serrées sur les tronçons d'extrémité 32, une machine de type « sertissage radial », comprenant une pluralité de doigts de serrage radial est par exemple utilisée.

Ce procédé de sertissage radial de la bague 170 est rapide, reproductible, facile à mettre en œuvre, et permet d'obtenir une pression radiale de serrage de l'ordre de 300 bars.

La pression de serrage radial étant élevée, il est avantageux d'insérer sous les tronçons d'extrémité 32 des éléments d'armure 29 une canule support du type de celle représentée à la figure 6, cette canule support étant disposée en regard de la bague 170 serrée par sertissage radial. Cette variante combinant l'emploi d'une canule support et d'une bague serrée par sertissage radial permet notamment de réduire le coût de fabrication de l'embout 14.

En variante, les deuxièmes régions angulaires 174 sont réalisées à base d'un matériau à mémoire de forme qui présente une première configuration déployée, dans le prolongement circonférentiel des premières régions 172, et une deuxième configuration contractée, bombée radialement vers l'extérieur, tel qu'illustré sur la figure 9.

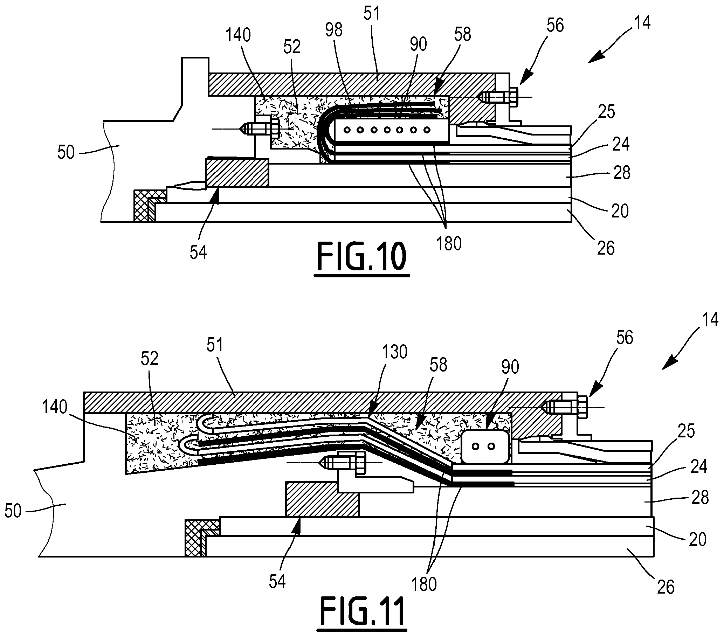

Un septième embout 14 selon l'invention est illustré par la figure 10.

À la différence du premier embout 14 illustré sur la figure 2, des fils d'armures 180 additionnels, avantageusement en carbone ou en acier, sont couplés entre les éléments d'armure 29, en regard des tronçons d'extrémité 32.

Ces fils d'armure additionnels 180 sont interposés entre la voûte de pression 28 ou la gaine de pression 20 et la couche d'armures intérieure 24 et/ou entre la couche d'armures intérieure 24 et la couche d'armures extérieure 25 et/ou entre la couche d'armures extérieure 25 et l'organe annulaire 90.

Chaque fil d'armure 180 est retroussé autour du bord avant de l'organe annulaire 90 et le long de la surface extérieure 98 de l'organe annulaire 90.

Chaque fil d'armure 180 présente ici une extrémité arrière disposée dans l'embout 14 en regard axialement du capot 51, avantageusement sous le bord arrière de l'organe annulaire 90.

Un matériau de remplissage 140 solide est disposé dans la chambre de réception 52 pour noyer les fils d'armure 180 et entrer en contact avec la voûte 50 et avec le capot 51.

Ceci permet de répartir les efforts de tension sur au moins quatre couches, à savoir deux couches d'armures 24, 25 couplées à deux ou trois nappes de fils d'armure 180.

L'organe annulaire 90 partage l'effort de tension sur l'ensemble des fils situés à l'avant de l'organe 90, ce qui permet d'appliquer un taux de contrainte moins élevé sur les éléments d'armure 29 des couches d'armures 24, 25.

Dans l'exemple représenté sur la figure 10, les tronçons d'extrémité 32 des éléments d'armure 29 sont sensiblement totalement couverts par l'organe annulaire 90.

Le huitième embout 14 selon l'invention, illustré par la figure 11, diffère du septième embout 14 représenté sur la figure 10 en ce que, de manière analogue au troisième embout 14 représenté sur la figure 5, une partie 130 du tronçon d'extrémité 32 de chaque élément d'armure 29 fait saillie au-delà de l'organe annulaire 90.

Les fils d'armure 180 additionnels ne sont pas retroussés autour de l'organe annulaire 90, mais sont disposés entre les parties en saillie 130 du tronçon d'extrémité 32.

Dans une variante (non représentée) de l'embout 14 de la figure 10, des inserts longitudinaux en matériau composite à base de fibres de carbone ou en acier sont interposés à l'arrière entre l'organe annulaire 90 et les couches d'armures 24, 25 et font saillie vers l'avant dans le matériau de remplissage 140.

Ainsi, bien que les tronçons d'extrémité 32 des éléments d'armure 29 s'arrêtent au niveau de l'organe annulaire 90, une partie de la contrainte est transférée aux inserts dans le matériau de remplissage 140, soit uniquement par frottement, soit aidé en cisaillement par des talons ajoutés par collage, ou directement usinés dans l'insert.

Dans la variante illustrée par la figure 15, chaque tronçon d'extrémité 32 d'un élément d'armure 29 est replié en boucle sur lui-même, sous l'organe annulaire 90.

Chaque tronçon d'extrémité 32 comporte ainsi une partie arrière 184 intérieure disposée sous l'organe annulaire 90, une partie avant 186 repliée en boucle et une partie arrière 188 extérieure disposée radialement entre la partie arrière 184 intérieure et l'organe annulaire 90.

Dans l'exemple représenté sur la figure 15, les parties arrière extérieures 188 sont placées au contact des parties arrière intérieures 184.

Dans l'exemple représenté sur la figure 16, un collier intermédiaire 190 est interposé entre les parties arrière intérieures 184 et les parties arrière extérieures 188.

La partie avant 186 est noyée dans le matériau de remplissage 140.

Dans une variante, une pièce de section cylindrique (non représentée) est placée à l'intérieur de la boucle formée dans la partie avant 186 pour maîtriser le rayon de repliage.

Cette disposition des tronçons d'extrémité 32 diminue la longueur d'ancrage ou augmente la tension reprise.

Grâce à l'invention qui vient d'être décrite, il est possible de conserver les éléments d'armure 29 dans leur état initial, sans modification de leur état de contrainte.

Dans les modes de réalisation des figures 2, 4, 6, 10, le pliage/dépliage des éléments d'armure 29 au niveau de leurs tronçons d'extrémité 32 est supprimé et il n'est pas nécessaire de former des éléments d'accrochage au niveau des extrémités libres 34 des éléments d'armures 29.

En outre, les tronçons d'extrémité 32 sont contenus dans une enveloppe cylindrique de rayon constant, ce qui supprime le risque d'enroulage/déroulage des éléments d'armure 29 au niveau de leur épanouissement lorsqu'ils sont soumis à de très fortes variations de tension.

Ceci permet d'éliminer des points faibles sur la tenue en fatigue, et de diminuer le temps de montage de l'embout 14.

Ainsi, l'organe annulaire 90 peut reprendre à lui seul l'intégralité de la tension supportée par l'embout 14, sans augmenter de manière significative la longueur d'ancrage.

Dans certains cas, le matériau de remplissage 140 peut même être supprimé dans la chambre 52.

À titre d'exemple, un organe annulaire 90 présentant une longueur L d'1m, et appliquant une pression de serrage radiale P de 200 bars sur les tronçons d'extrémité 32, en considérant un coefficient de frottement de 0,1 entre l'organe annulaire 90 et les tronçons d'extrémité 32 autorise une reprise de tension de 63 t pour une structure de 100 mm et de diamètre et de 189 t pour une structure de 300 mm de diamètre.

L'utilisation d'une couche de frottement additionnel 92 avec un coefficient de frottement supérieur à 0,1, notamment supérieur à 0,3, augmente la tension reprise et/ou diminue la longueur de l'organe annulaire 90.

Ainsi, avec un organe annulaire de seulement 0,3 m de longueur, qui exerce une pression radiale P de 200 bars sur les tronçons d'extrémité 32 pour un diamètre de 0,3 m, avec un coefficient de frottement de 0,35, une tension de l'ordre de 198 t est reprise.

En surface, le serrage de l'organe annulaire 90 à une pression radiale supérieure à 100 bars est applicable directement sur la voûte de pression 28, sans renfort particulier, car il est du même ordre que la contrainte hydrostatique subie par la conduite flexible 10 à sa profondeur maximale.

Comme on l'a vu précédemment, pour des applications en eau profonde, lorsque la tension reprise augmente encore, il est possible de reprendre seulement partiellement une partie de la tension axiale à l'aide de l'organe annulaire 90, et de reprendre le reste de la tension axiale avec un ancrage par encastrement tel qu'il est décrit sur les figures 5 ou 11.

Dans ce cas, la présence de l'organe annulaire 90 limite considérablement les contraintes et les déplacements dans la zone de décollement des parties 130 en saillie des éléments d'armure 29, ce qui résout le problème de fatigue, sans avoir à augmenter significativement la longueur L de l'organe annulaire 90.

**Revendications**

1. Conduite flexible (10) comprenant au moins une gaine de pression (20), au moins une couche (24, 25) d'armures de traction disposée extérieurement par rapport à la gaine de pression (20), et un embout de connexion (14), l'embout (14) comprenant :

   - une voûte d'extrémité (50) s'étendant suivant un axe central (A-A') ;
   - un capot extérieur (51) fixé sur la voûte d'extrémité (50) et délimitant avec la voûte d'extrémité (50), une chambre de réception (52) d'un tronçon d'extrémité (32) des éléments d'armure (29) ;
   - au moins un organe annulaire (90) appliqué extérieurement sur les éléments d'armure (29) d'une couche d'armure (24, 25), l'organe annulaire (90) étant logé au moins en partie dans la chambre de réception (52) entre les éléments d'armure (29) et le capot extérieur (51) ;

   **caractérisé en ce que** l'organe annulaire (90) applique sur les éléments d'armure (29) une pression radiale de serrage vers l'axe central (A-A') supérieure à 100 bars, et **en ce que** l'organe annulaire (90) est maintenu axialement par rapport à la voûte d'extrémité (50) en étant en prise axialement avec la voûte d'extrémité (50) l'organe annulaire (90) comportant au moins un organe (120) d'accrochage axial sur la voûte (50) ou/et en prise radialement vers l'extérieur avec le capot (51), un contact axial étant présent entre un bord arrière de l'organe annulaire (90) et le capot (51).

2. Conduite selon la revendication 1, **caractérisé en ce que** la longueur de l'organe annulaire (90), prise le long de l'axe central (A-A'), est supérieure à 200 mm.

3. Conduite selon l'une quelconque des revendications précédentes, **caractérisé en ce que** le coefficient de frottement entre les éléments d'armure (29) et l'organe annulaire (90) est supérieur à 0,1, et est notamment supérieur à 0,3.

4. Conduite selon l'une quelconque des revendications précédentes, **caractérisé en ce qu'**il comporte une couche intermédiaire (92) de frottement interposée radialement entre les éléments d'armure (29) et l'organe annulaire (90) et/ou entre l'organe annulaire (90) et le capot (51).

5. Conduite selon la revendication 4, **caractérisé en ce que** les éléments d'armure (29) présentent, en regard de l'organe annulaire (90), une surface extérieure dénudée placée directement en contact avec la couche intermédiaire de frottement (92).

6. Conduite selon l'une quelconque des revendications précédentes, **caractérisé en ce que** le capot (51) s'étend axialement entre un bord avant (72) fixé sur la voûte d'extrémité (50) et un bord arrière (74) disposé à l'écart de la voûte d'extrémité (50), l'organe annulaire (90) s'étendant axialement à l'écart de la voûte d'extrémité (50) au voisinage du bord arrière (74).

7. Conduite selon la revendication 6, **caractérisé en ce que** l'embout (14) comporte un ensemble avant d'étanchéité (54) autour de la gaine de pression (20), l'ensemble avant d'étanchéité (54) étant décalé axialement à l'écart de l'organe annulaire (90) au voisinage de la voûte d'extrémité (50).

8. Conduite selon l'une quelconque des revendications précédentes, **caractérisé en ce que** l'organe annulaire (90) présente une surface périphérique intérieure (96) sensiblement cylindrique autour de l'axe central (A-A'), les éléments d'armure (29) présentant chacun un tronçon d'extrémité (32) s'étendant dans une enveloppe cylindrique en regard de la surface périphérique interne (96).

9. Conduite selon l'une quelconque des revendications précédentes, **caractérisé en ce que** l'extrémité libre (34) de chaque élément d'armure (29) s'étend axialement en regard de l'organe annulaire (90), avantageusement radialement vers l'intérieur par rapport à l'organe annulaire (90), la chambre de réception (52) étant éventuellement dépourvue de matériau de remplissage.

10. Conduite selon l'une quelconque des revendications 1 à 8, **caractérisé en ce qu'**au moins une partie libre (130) d'un tronçon d'extrémité (32) d'un élément d'armure (29) fait saillie axialement vers la voûte d'extrémité (50) au-delà de l'organe annulaire (90) dans la chambre de réception (52), la partie libre (130) étant noyée dans un matériau de remplissage (140) disposé dans la chambre de réception (52) et **en ce que** avantageusement la partie libre (130) s'éloigne radialement de l'axe central (A-A') et/ou se rapproche radialement de l'axe central (A-A') et/ou présente un élément d'ancrage (138) disposé dans le matériau de remplissage (140).

11. Conduite selon l'une quelconque des revendications précédentes, **caractérisé en ce que** l'organe annulaire (90) est choisi parmi un collier de serrage (100) présentant une surface circonférentielle intérieure (96) sensiblement continue autour de l'axe central (A-A'), une bague déformée (170) ou un ensemble comprenant une bague intérieure (160) et une bague extérieure (162) serrant radialement vers l'axe central (A-A') la bague intérieure (160) par effet de coin.

12. Procédé de montage d'un embout (14) d'une conduite flexible (10) selon l'une quelconque des revendications précédentes, **caractérisé en ce qu'**il comporte les étapes suivantes :

- fourniture d'une extrémité de conduite (10) comportant une gaine de pression (20) et au moins une couche d'armures (24, 25) disposée autour de la gaine de pression (20) ;
- disposition de l'organe annulaire (90) autour et à l'extérieur des tronçons d'extrémité (32) des éléments d'armure (29) d'une couche d'armures (24, 25) ;
- serrage de l'organe annulaire (90) pour appliquer sur les tronçons d'extrémité (32) une pression radiale vers l'axe central (A-A') supérieure à 100 bars ;
- mise en place d'un capot (51) et d'une voute d'extrémité (50) autour de l'organe annulaire (90) pour définir une chambre de réception (52) recevant les extrémités libres des éléments d'armure (29) et au moins en partie l'organe annulaire (90).

13. Procédé selon la revendication 12, **caractérisé en ce qu'**il comporte une étape d'interposition d'une couche intermédiaire de frottement (92) entre l'organe annulaire (90) et les éléments d'armure (29) avant le serrage de l'organe annulaire (90).

14. Procédé selon l'une quelconque des revendications 12 à 13, **caractérisé en ce qu'**après l'étape de serrage, une partie libre (130) d'au moins un élément d'armure (29) fait saillie axialement vers la voûte d'extrémité (50) au-delà de l'organe annulaire (90) dans la chambre de réception (52), le procédé comprenant l'injection d'un matériau de remplissage (140) propre à se solidifier dans la chambre de réception (52) pour noyer la partie libre (130).

**Patentansprüche**

1. Flexible Leitung (10), welche aufweist zumindest eine Druckumhüllung (20), mindestens eine Zugarmierungsschicht (24, 25), welche außen bezüglich der Druckumhüllung (20) angeordnet ist, und ein Verbindungsansatzstück (14), wobei das Ansatzstück (14) aufweist:

- eine Endvoute (50), welche sich entlang einer zentralen Achse (A-A') erstreckt,
- eine Außenabdeckung (51), welche an der Endvoute (50) befestigt ist und welche mit der Endvoute (50) eine Kammer zur Aufnahme (52) eines Endabschnitts (32) von Armierungselementen (29) begrenzt,
- mindestens ein ringförmiges Organ (90), welches von außen gegen die Armierungselemente (29) einer Armierungsschicht (24, 25) angelegt ist, wobei das ringförmige Organ (90) zumindest teilweise in der Kammer zur Aufnahme (52) zwischen den Armierungselementen (29) und der Außenabdeckung (51) untergebracht ist,

**dadurch gekennzeichnet, dass** das ringförmige Organ (90) auf die Armierungselemente (29) einen Radialklemmdruck in Richtung zu der zentralen Achse (A-A') aufbringt, welcher größer als 100 bar ist, und dadurch, dass das ringförmige Organ (90) axial bezüglich der Endvoute (50) gehalten wird, indem es axial in Eingriff mit der Endvoute (50) ist, wobei das ringförmige Organ (90) mindestens ein Organ (120) zur axialen Befestigung an der Voute (50) hat, und/oder radial nach außen hin in Eingriff mit der Abdeckung (51) ist, wobei ein axialer Kontakt zwischen einem hinteren Rand des ringförmigen Organs (90) und der Abdeckung (51) vorhanden ist.

2. Leitung gemäß Anspruch 1, **dadurch gekennzeichnet, dass** die Länge des ringförmigen Organs (90), genommen entlang der zentralen Achse (A-A'), größer als 200 mm ist.

3. Leitung gemäß irgendeinem der vorherigen Ansprüche, **dadurch gekennzeichnet, dass** der Reibungskoeffizient zwischen den Armierungselementen (29) und dem ringförmigen Organ (90) größer als 0,1 und insbesondere größer als 0,3 ist.

4. Leitung gemäß irgendeinem der vorherigen Ansprüche, **dadurch gekennzeichnet, dass** sie eine Reibungszwischenschicht (92) aufweist, welche radial zwischen den Armierungselementen (29) und dem ringförmigen Organ (90) und/oder zwischen dem ringförmigen Organ (90) und der Abdeckung (51) angeordnet ist.

5. Leitung gemäß Anspruch 4, **dadurch gekennzeichnet, dass** die Armierungselemente (29) gegenüber vom ringförmigen Organ (90) eine blanke Außenfläche haben, welche in direktem Kontakt mit der Reibungszwischenschicht (92) angeordnet ist.

**6.** Leitung gemäß irgendeinem der vorherigen Ansprüche, **dadurch gekennzeichnet, dass** sich die Abdeckung (51) axial zwischen einem vorderen Rand (72), welcher an der Endvoute (50) befestigt ist, und einem hinteren Rand (74), welcher im Abstand zur Endvoute (50) angeordnet ist, erstreckt, wobei sich das ringförmige Organ (90) axial im Abstand zur Endvoute (50) benachbart zum hinteren Rand (74) erstreckt.

**7.** Leitung gemäß Anspruch 6, **dadurch gekennzeichnet, dass** das Ansatzstück (14) eine vordere Dichtungseinheit (54) um die Druckumhüllung (20) herum aufweist, wobei die vordere Dichtungseinheit (54) axial im Abstand zum ringförmigen Organ (90) benachbart zu der Endvoute (50) versetzt ist.

**8.** Leitung gemäß irgendeinem der vorherigen Ansprüche, **dadurch gekennzeichnet, dass** das ringförmige Organ (90) eine innere Umfangsfläche (96) hat, welche im Wesentlichen zylindrisch um die zentrale Achse (A-A') herum ist, wobei die Armierungselemente (29) jeweilig einen Endabschnitt (32) haben, welcher sich in einer zylindrischen Einhüllung gegenüber von der inneren Umfangsfläche (96) erstreckt.

**9.** Leitung gemäß irgendeinem der vorherigen Ansprüche, **dadurch gekennzeichnet, dass** sich das freie Ende (34) von jedem Armierungselement (29) axial gegenüber vom ringförmigen Organ (90), vorteilhafterweise radial nach innen bezüglich des ringförmigen Organs (90), erstreckt, wobei die Kammer zum Aufnehmen (52) gegebenenfalls mit einem Füllmaterial vorgesehen ist.

**10.** Leitung gemäß irgendeinem der Ansprüche 1 bis 8, **dadurch gekennzeichnet, dass** mindestens ein freier Teil (130) eines Endabschnitts (32) eines Armierungselements (29) in der Kammer zum Aufnehmen (52) über das ringförmige Organ (90) zur Endvoute (50) hin axial vorsteht, wobei der freie Teil (130) in ein Füllmaterial (140) eingebettet ist, welches in der Kammer zum Aufnehmen (52) angeordnet ist, und dadurch, dass vorteilhafterweise der freie Teil (130) sich von der zentralen Achse (A-A') radial entfernt und/oder sich der zentralen Achse (A-A') radial annähert und/oder ein Ankerelement (138) hat, welches im Füllmaterial (140) angeordnet ist.

**11.** Leitung gemäß irgendeinem der vorherigen Ansprüche, **dadurch gekennzeichnet, dass** das ringförmige Organ (90) ausgewählt ist aus einer Klemmschelle (100), welche eine innere Umfangsfläche (96) hat, welche um die zentrale Achse (A-A') herum im Wesentlichen kontinuierlich ist, einem deformierten Ring (170) oder einer Gruppe, welche aufweist einen inneren Ring (160) und einen äußeren Ring (162), welcher gegen den inneren Ring (160) radial zur zentralen Achse (A-A') mittels Keileffekts klemmt.

**12.** Verfahren zum Montieren eines Ansatzstücks (14) einer flexiblen Leitung (10) gemäß irgendeinem der vorherigen Ansprüche, **dadurch gekennzeichnet, dass** es die folgenden Schritte aufweist:

- Bereitstellen eines Endes einer Leitung (10), welches eine Druckumhüllung (20) und mindestens eine Armierungsschicht (24, 25), welche um die Druckumhüllung (20) herum angeordnet ist, aufweist,
- Anordnen des ringförmigen Organs (90) um die Endabschnitte (32) der Armierungselemente (29) einer Armierungsschicht (24, 25) herum und außen davon,
- Klemmen des ringförmigen Organs (90), um an die Endabschnitte (32) einen radialen Druck in Richtung zu der zentralen Achse (A-A') hin anzulegen, welcher größer als 100 bar ist,
- Anbringen einer Abdeckung (51) und einer Endvoute (50) um das ringförmige Organ (90) herum, um eine Kammer zum Aufnehmen (52) zu definieren, welche die freien Enden der Armierungselemente (29) und zumindest teilweise das ringförmige Organ (90) aufnimmt.

**13.** Verfahren gemäß Anspruch 12, **dadurch gekennzeichnet, dass** es einen Schritt des Anordnens einer Reibungszwischenschicht (92) zwischen dem ringförmigen Organ (90) und den Armierungselementen (29) vor dem Klemmen des ringförmigen Organs (90) aufweist.

**14.** Verfahren gemäß irgendeinem der Ansprüche 12 bis 13, **dadurch gekennzeichnet, dass** nach dem Schritt des Klemmens ein freier Teil (130) von mindestens einem Armierungselement (29) in der Kammer zum Aufnehmen (52) über das ringförmige Organ (90) zur Endvoute (50) hin axial vorsteht, wobei das Verfahren aufweist das Einspritzen eines Füllmaterials (140), welches imstande ist, sich in der Kammer zum Aufnehmen (52) zu verfestigen, um den freien Teil (130) einzubetten.

**Claims**

**1.** Flexible pipe (10) comprising at least one pressure sheath (20), at least one tensile armour layer (24, 25) disposed externally relative to the pressure sheath (20), and a connection end-piece (14), the end-piece (14) comprising:

- an end vault (50) extending along a central axis (A-A');

- an exterior cover (51) fastened on to the end vault (50) and delimiting with the end vault (50), a reception chamber (52) for receiving an end section (32) of the armour elements (29);
- at least one annular member (90) applied externally over the armour elements (29) of an armour layer (24, 25), the annular member (90) being accommodated at least partially in the reception chamber (52) between the armour elements (29) and the exterior cover (51);

**characterised in that** the annular member (90) applies over the armour elements (29) a radial clamping pressure towards the central axis (A-A') that is greater than 100 bars, and **in that** the annular member (90) is held in position axially relative to the end vault (50) by being in engagement axially with the end vault (50), the annular member (90) comprising at least one axial attachment member (120) for attachment on the end vault (50), or/and by being in engagement radially towards the exterior with the cover (51), an axial contact being present between a rear edge of the annular member (90) and the cover (51).

2. Flexible pipe (10) according to claim 1, **characterised in that** the length of the annular member (90), taken along the central axis (A-A'), is greater than 200 mm.

3. Flexible pipe (10) according to any one of the preceding claims, **characterised in that** the coefficient of friction between the armour elements (29) and the annular member (90) is greater than 0.1, and is in particular greater than 0.3.

4. Flexible pipe (10) according to any one of the preceding claims, **characterised in that** it includes an intermediate friction layer (92) radially interposed between the armour elements (29) and the annular member (90) and/or between the annular member (90) and the cover (51).

5. Flexible pipe (10) according to claim 4, **characterised in that** the armour elements (29) have, positioned to face the annular member (90), an exterior exposed surface placed directly in contact with the intermediate friction layer (92).

6. Flexible pipe (10) according to any one of the preceding claims, **characterised in that** the cover (51) extends axially between a front edge (72) fixed on to the end vault (50) and a rear edge (74) disposed away from the end vault (50), the annular member (90) extending axially away from the end vault (50) in the vicinity of the rear edge (74).

7. Flexible pipe (10) according to claim 6, **characterised in that** the end-piece (14) comprises a front sealing assembly (54) around the pressure sheath (20), the front sealing assembly (54) being offset axially away from the annular member (90) in the vicinity of the end vault (50).

8. Flexible pipe (10) according to any one of the preceding claims, **characterised in that** the annular member (90) has an interior peripheral surface (96) that is substantially cylindrical around the central axis (A-A'), with the armour elements (29) each having an end section (32) extending into a cylindrical casing envelope arranged facing the internal peripheral surface (96).

9. Flexible pipe (10) according to any one of the preceding claims, **characterised in that** the free end (34) of each armour element (29) extends axially to be facing the annular member (90), advantageously radially towards the interior relative to the annular member (90), the reception chamber (52) being possibly free of any filler material.

10. Flexible pipe (10) according to any one of claims 1 to 8, **characterised in that** at least one free portion (130) of an end section (32) of an armour element (29) protrudes out axially towards the end vault (50) beyond the annular member (90) into the reception chamber (52), the free portion (130) being embedded in a filler material (140) disposed in the reception chamber (52), and advantageously the free portion (130) extends away radially from the central axis (A-A') and/or radially approaches the central axis (A-A') and/or has an anchoring element (138) disposed in the filler material (140).

11. Flexible pipe (10) according to any one of the preceding claims, **characterised in that** the annular member (90) is selected from a clamping collar (100) having an interior circumferential surface (96) that is substantially continuous about the central axis (A-A'), a deformed ring (170) or an assembly comprising an interior ring (160) and an exterior ring (162) clamping the interior ring (160) radially toward the central axis (A-A') by means of a wedge effect.

12. A mounting method for mounting an end-piece (14) of a flexible pipe (10) according to any one of the preceding claims, **characterised in that** it includes the following steps:

- providing a pipe end (10) including a pressure sheath (20) and at least one armour layer (24, 25) disposed around the pressure sheath (20);
- placing the annular member (90) around and on the exterior of the end sections (32) of the armour elements (29) of a armour layer (24, 25);
- clamping of the annular member (90) in order to apply on the end sections (32) a radial pressure toward the central axis (A-A') greater than 100 bars;
- setting in position of a cover (51) and an end vault (50) around the annular member (90) in order to define a reception chamber (52) for receiving the free ends of the armour elements (29) and at least in part the annular member (90).

13. A method according to claim 12, **characterised in that** it includes a step of interposing of an intermediate friction layer (92) between the annular member (90) and the armour elements (29) elements prior to the clamping of the annular member (90).

14. A method according to any one of claims 12 to 13, **characterised in that** after the step of clamping, a free portion (130) of at least one armour element (29) protrudes out axially towards the end vault (50) beyond the annular member (90) into the reception chamber (52), the method comprising the injection of a filler material (140) that is capable of solidifying in the reception chamber (52) in order to embed the free portion (130).

## FIG.1

FIG.2

FIG.3

FIG.4

FIG.15

FIG.16

FIG.5

FIG.6

**FIG.7**

**FIG.8**

**FIG.9**

FIG.10

FIG.11

FIG.13

FIG.14

FIG.12

EP 2 935 965 B1

**EP 2 935 965 B1**

## RÉFÉRENCES CITÉES DANS LA DESCRIPTION

**Documents brevets cités dans la description**

- WO 03004921 A

- WO 2007144553 A